# EUROPEAN PATENT SPECIFICATION

(11) **EP 1 895 744 B1**
(45) Date of publication and mention of the grant of the patent: **29.09.2010**
(21) Application number: 06119844.6
(22) Date of filing: 30.08.2006
(51) Int. Cl.: H04L 29/08

(54) **Method and apparatus for simplified user access to multiple browser transports in a mobile communication device**
Verfahren und Vorrichtung zum vereinfachten Anwenderzugriff zu mehreren Browsern in einem mobilen Kommunikationsgerät
Procédé et dispositif pour accès simplifié d'utilisateurs aux navigateurs multiples dans un appareil de communication mobile

(43) Date of publication of application: 05.03.2008
(73) Proprietor: RESEARCH IN MOTION LIMITED, Waterloo, Ontario N2L 3W8 (CA)
(72) Inventor: Bockiing, Andrew Douglas, Waterloo Ontario N2K 3Y8 (CA); Bredin, Robert, Guelph Ontario N1G 4R8 (CA); Edwards, Robert, Waterloo Ontario N2T 2N5 (CA); Sohm, Mark, Guelph Ontario N1E 6R3 (CA); Wilhelm, Kathryn Ann, Guelph Ontario N1E 4A8 (CA)
(74) Representative: MERH-IP Matias Erny Reichl Hoffmann

(56) References cited:
- EP-A- 1 231 548
- WO-A-2004/038563
- US-A1- 2001 056 444

## Description

The present application relates generally to mobile communication devices and more particularly to a method and system for providing a single browser icon for automatically selecting an appropriate browser transport from among a plurality of available browser transports on a mobile communication device.

Mobile communication devices such as wireless personal digital assistants (PDAs) and smart telephones are well known for providing users with services such as email, Web browsing, text messaging, etc. Such devices communicate over a wide variety of networks including data-only networks such as Mobitex and DataTAC as well as complex voice and data networks such as the Global System for Mobile Communications/General Packet Radio Service (GSM/GPRS), Code Division Multiple Access (CDMA), Enhanced Data Rates for Global Evolution (EDGE), Universal Mobile Telecommunications System (UMTS) and CDMA2000 networks.

It is common to provide a separate browser icon entry point for each browser configuration present on the device. Thus, for a corporate user up to three different browser icons may be provided on the device - a corporate enterprise browser, an Internet browser, and a Wireless Application Protocol (WAP) browser.

Although the browsers are quite similar, each has a specific use that the other browsers are unable to duplicate. The corporate enterprise browser is the only browser that can access content inside the user's corporate firewall. The Internet browser is the only browser that can access and browse Internet sites via a hosted service, without requiring access to a corporate enterprise server. WAP is an open international standard for applications that use wireless communication. Thus, a WAP browser is designed to provide all of the basic services of a computer based Web browser but is simplified to operate within the restrictions of a mobile communication device. The WAP browser is the only browser with access to a service provider's portal and carrier-specific subscription services.

Since each of the foregoing specific capabilities is required for a corporate user, it is not possible to simply remove any of the browser configurations from the device. However, a typical user may be expected to find the presence of multiple browser icons confusing and unintuitive. Many users are not aware of the capabilities of the different browsers and simply want to use a browser to browse the Web.

Also, when attempting to access a Web page a user may find that the page is not accessible because, for example, the user's corporate enterprise server is down or offline or the user is attempting to access a corporate Intranet site using the Internet browser icon rather than the corporate enterprise browser icon.
EP-A-1231548 discloses a bookmark frame and method of launching a plurality of browsers in an internet terminal. The bookmark frame includes a browser ID field and a URL in a one to one relationship. The user can then select a bookmark and the browser ID is interpreted so that the browser can be launched automatically.
US-A-2001/0056444 discloses a system for browsing content described in different information description languages without installing corresponding browsers.

### GENERAL

According to an aspect of this specification, a single browser icon entry point may be set forth for providing user access to the Web while maintaining the capabilities of the existing browsers to access separate domains (corporate enterprise browser, Internet browser, WAP browser).

According to another aspect, the mobile communication device automatically may associate the appropriate browser transport with the single browser icon based on information being requested by the user (e.g. Internet Web site, Intranet site, carrier's subscription service, etc.)

In one aspect the invention provides a method for providing Web access to a user on a mobile communication device, comprising: associating a plurality of browser transports with a single browser icon for display on said mobile communication device;
associating a list of domains with each browser transport to permit URLs associated with said domains to be accessed using an associated browser transport without any user interaction, selecting a predetermined one of said plurality of browser transports for displaying information based on matching said URLs being requested by the user with said list of domains; and wherein said associating a plurality of browser transports with a single browser icon is effected by downloading browser configuration service records, specifying the list of domains associated with each browser transport, to said mobile communication device.

By providing a single browser icon entry point, simplified user access may be provided to different domains while maintaining the capabilities of the existing browsers. Also, providing automatic association of an appropriate browser transport with the single browser icon may address the problem of user confusion regarding appropriate browser selection.
In another aspect the invention provides a system for providing Web access to a user, comprising: a server computer comprising a plurality of configuration service records for associating a plurality of browser transports with a single browser icon for display on a mobile communication device, wherein said configuration service records further comprise a list of domains associated with each transport to permit URLs associated with said domains to be accessed using an associated browser transport without requiring user interaction; and said mobile communication device for downloading said configuration service records and for executing a browser application on said mobile communication device for selecting a predetermined one of said plurality of browser transport protocols for displaying information based on matching said URLs being requested by the user with said list of domains.

### BRIEF DESCRIPTION OF THE DRAWINGS

Figure 1 is a block diagram of a corporate enterprise communication architecture, according to the prior art;

Figure 2 is a block diagram of a hosted Internet service architecture, according to the prior art;

Figure 3 is a block diagram of a WAP architecture, according to the prior art;

Figure 4A shows a prior art mobile communication device graphical user interface for accessing multiple browser platforms via respective browser icons;

Figure 4B shows a mobile communication device graphical user interface for accessing multiple browser platforms via a single browser icon, according to an exemplary embodiment; and

Figure 5 is a flowchart showing a method of implementing access to multiple browser platforms via a single browser icon and automatically associating an appropriate browser transport with the single browser icon, according to the exemplary embodiment.

### DESCRIPTION OF PREFERRED EMBODIMENTS

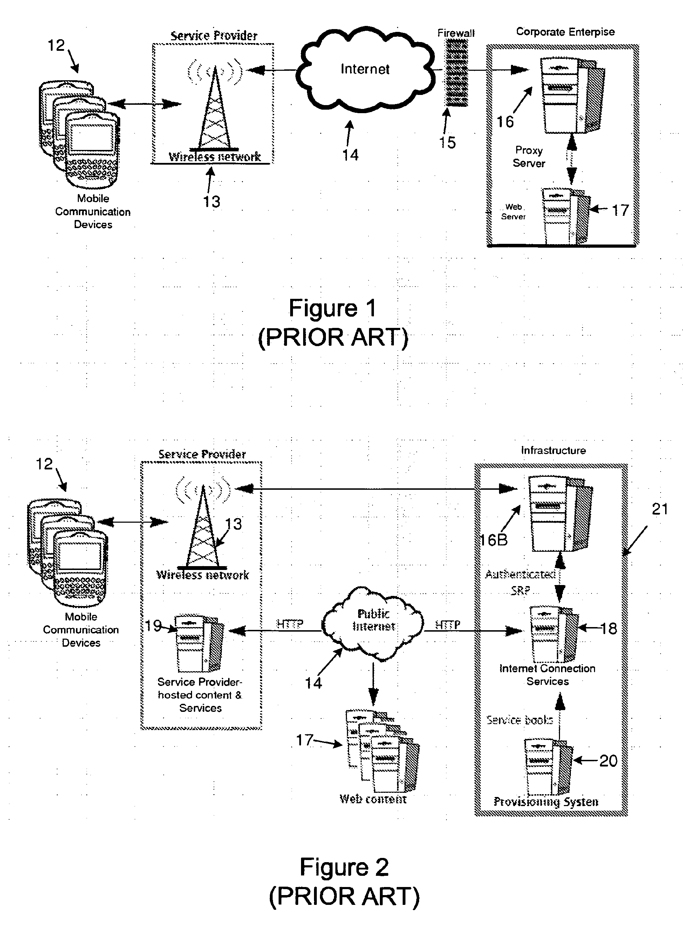

Reference is first made to the corporate enterprise communication architecture shown in Figure 1. A plurality of mobile communication devices 12 are shown communicating over a wireless network 13 and the Internet 14 to a corporate enterprise through a firewall 15. The mobile communication devices 12 are based on the computing environment and functionality of a wireless personal digital assistant. It is, however, to be understood that devices 12 can include the construction and functionality of other electronic devices, such as cell phones, smart telephones, and the like. As would be understood by one of ordinary skill in the art, wireless network 13 may be a GSM/GPRS, Cellular Digital Packet Data (CDPD), Time Division Multiple Access (TDMA), iDEN Mobitex, DataTAC network, EDGE or UMTS, or a broadband network such as Bluetooth or variants of 802.11.

The corporate enterprise includes a proxy server 16 for providing company controlled, secure, wireless Web access, email access and Personal Information Manager (PIM) synchronization. The proxy server 16 also provides a Mobile Data Service (MDS) for accessing Web content from a Web server 17. The proxy server 16 may also provide email functionality, although such functionality is not germane to this specification. While only one Web server 17 is shown, for illustration purposes, a person of skill in the art will understand that the corporate enterprise could have many such servers for hosting Web sites or graphic download sites, providing access to picture files such as Joint Photographic Experts Group (JPEG), Tagged Image File Format (TIFF), bitmap (BMP), Portable Network Graphics (PNG), Moving Picture Experts Group (MPEG-4), Moving JPEG (MOV), Graphics Interchange Format (GIF), Scalable Vector Graphics (SVG), etc.

In terms of Web browsing functionality, each mobile communication device 12 communicates with proxy server 16 using Hypertext Transfer Protocol (HTTP) over an Internet Protocol (IP) optimized for mobile environments. In some embodiments, the device 12 communicates with the proxy server 16 using either HTTP over Transmission Control Protocol over Internet Protocol (TCP/IP) or a variant of TCP/IP optimized for mobile use (e.g. Wireless Profiled TCP) or over other, proprietary protocols. For example, in some systems HTTP is run over Internet Point-to-Point Protocol (IPPP) and an encrypted Global Messaging Exchange (GME) channel over which datagrams are exchanged to transport data between the mobile communication device 12 and proxy server 16. Proprietary protocols such as (IPPP/GME/MDP), and a Message Delivery Protocol (MDP) may be used to separate the GME datagrams into one or more MDP packets which are transported over User Datagram Protocol over Internet Protocol (UDP/IP). The proxy server 16 enables Internet access, preprocesses and compresses Hypertext Markup Language (HTML) and Extensible Markup Language (XML) content from the Web server 17 before sending it to the device 12, transcodes content type, stores HTTP cookies on behalf of the device 12, and supports certificate authority authentications, etc.

In response to a request from the device browser, the proxy server 16 retrieves content from Web server 17 and creates a custom document containing both images to be displayed on the device and data in the form of compressed versions of requested portions of the document. The document is preferably of "multi-part" format to improve transmission to and processing efficiency within the device 12. Specifically, in order to display composite Web pages (i.e. pages composed of a main Wireless Markup Language (WML) or HTML page and one or more related auxiliary files, such as style sheets, JavaScript files, or image files) the device browser is normally required to send multiple HTTP requests to the proxy server 16. However, according to a multi-part generation feature of the proxy server 16, all necessary parts of a composite Web page are preferably posted in a single bundle, thereby enabling the device browser to download all of the required content with a single request. The header in the proxy server response identifies the content as a multi-part bundle (e.g. Multi-Purpose Mail Extensions (MIME)/multipart , as defined by RFC 2112, E. Levinson, March 1997).
Whereas users of the mobile communication devices 12 enjoy benefits of Web browsing, wireless Java and other application downloads via proxy server 16, these particular features have at least as much value to a non-corporate "prosumer". A prosumer is a type of electronic product that straddles the professional and consumer electronic product markets, or one who uses such a product. Consequently, it is known in the art to provide a hosted Internet service architecture, as illustrated in Figure 2. Infrastructure 21 includes an authentication server 16B, Internet connection service 18 and provisioning system 20. The Internet service of Figure 2 is deployed through the provisioning system 20, which manages services within the Infrastructure 21, including user accounts, features and profiles, as well as storing subscription information. The user's service provider controls and manages Internet connection service 18 on a per-device/group basis through the provisioning system 20, and may also may host content and services via service provider-hosted content and services 19 (e.g. WAP, HTML, Java archive (JAR), etc.), as well as provide public Internet content 17 access via Internet 14. Service blocking is based on PIN and subscription information stored within provisioning system 20 for each mobile communication device 12. Connectivity and authentication are handled by authentication server 16B using Server Relay Protocol (SRP).

To enable Web access on mobile communication devices 12, appropriate service books are "pushed" (i.e. downloaded) from the provisioning system 20 to the devices 12 (e.g. an IPPP service book to enable communication between a mobile communication device 12 and the Infrastructure 21 using IPPP, a browser configuration service book that contains configuration parameters for the device browser to access the Internet 14, etc.) Upon full registration, all necessary service books for each enabled service are pushed directly to each mobile communication device 12 which, in response, automatically accepts the service books.

In the implementation of Figure 2, HTML content is simplified and enhanced (i.e. "transcoded") to a format similar to a WAP binary representation of XML (WBXML), which is designed to reduce transmission size of XML data and enable efficient transmission over narrowband wireless communication channels. HTML content is parsed and stripped of extraneous tags and content that the device browser cannot render. Images are scaled down and automatically downsized and converted to a .png format for maximum bandwidth efficiency. Then, the entire Web page is divided into a series of bits (referred to as "tokens") and compressed for display on the mobile communication device 12.

Unlike WAP browser sessions, which must establish a new connection each time the network is accessed, the solution of Figure 2 uses the existing network connection to the Infrastructure 21. Also, unlike the system of Figure 1, the Internet browser is a component of the Infrastructure 21 in the hosted solution of Figure 2. This enables prosumer users of mobile communication devices 12 to access public HTML content 17 on the Internet 14 though service provider-hosted content and services 19 via the Infrastructure 21. It should be noted that, typically, the service offered by the system of Figure 2 does not support Java applications, TCP sockets, and TripleDES data encryption, nor is there access to Intranets that are protected by firewalls. However, secure HTTP (HTTPS) and Secure Sockets Layer (SSL) may be supported if appropriate libraries have been uploaded to the mobile communication device 12.

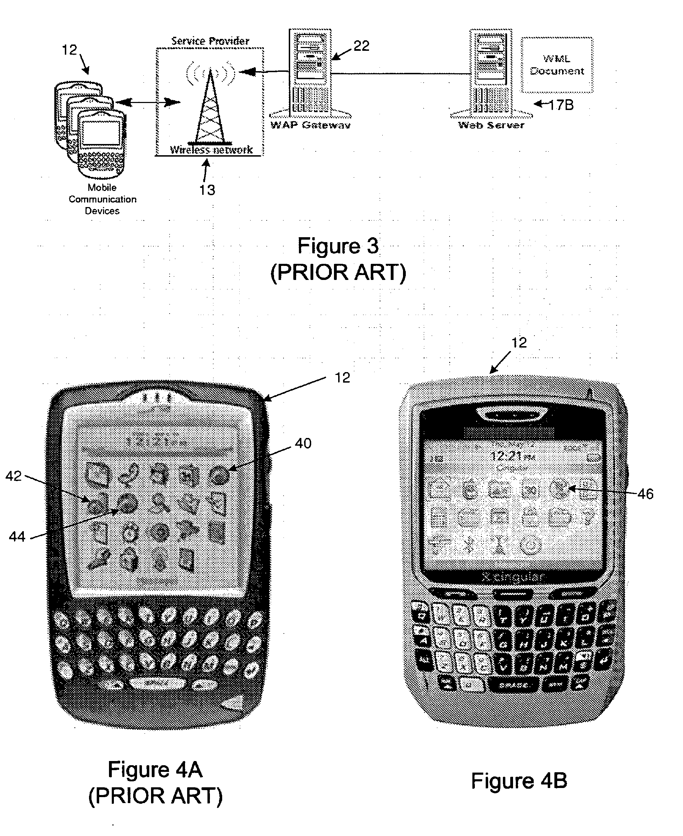

With reference to Figure 3, mobile communication devices 12 access documents stored in Mobile internet sites, or WAP sites on a server 17B, via a WAP gateway 22. The WAP sites are Websites written in, or dynamically converted to WML and accessed via the WAP browser icon on a mobile communication device 12.

Turning to Figure 4A, a prior art mobile communication device 12 is shown with an LCD display 30 depicting numerous icons for launching applications within the device, including an Internet Browser icon 40, a corporate enterprise browser 42, and a WAP browser 44. As discussed above, the presence of multiple browser icons 40, 42 and 44 can be confusing and unintuitive to the user.

Therefore, as shown in Figure 4B, a mobile device browser 12 is provided with a single browser icon 46 as an entry point for providing user access to the Web while maintaining the capabilities of the existing browsers to access separate domains (corporate enterprise browser, Internet browser, WAP browser). The mobile communication devices 12 each comprise a processor which controls overall operation of the device including the modified functionality of the invention through execution of suitable software/program code stored on a computer readable medium such as a memory of the device.

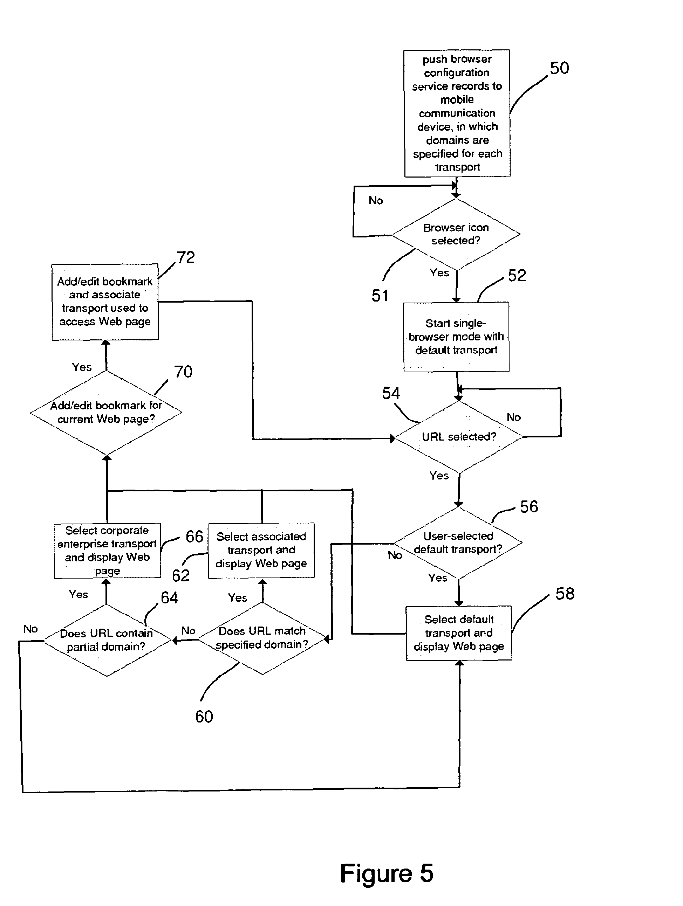

With reference to Figure 5, a flowchart is set forth showing steps in a method for providing the single-browser icon functionality of Figure 4B. Initially, at step 50, the proxy server 16 pushes browser configuration service records to the mobile communication devices 12, for use in associating the single browser 46 to an appropriate transport. The association is made in accordance with a specified priority. Typically, the order of priority is 1) corporate enterprise transport, 2) Internet browser transport, and lastly 3) WAP browser transport. Thus, the corporate enterprise transport is given first priority if present (i.e. downloaded from the provisioning server 20), followed by the Internet browser transport, followed by the WAP browser transport. It should be noted that this priority scheme preferably does not involve any 'stepping-down' retry mechanism wherein the next priority transport is selected only if the initial transport fails, as this would require excessive time to implement and would likely be aborted by the user before being completed. Instead, the mobile device 12 preferably tries the highest available transport and simply reports any errors to the user.

The configuration service records downloaded to the mobile communication devices 12 also specify a default home page and a list of domains associated with each transport. The latter association permits URLs to be automatically accessed using the appropriate transport, without any user interaction. Thus, for example, a service provider can specify domains within their content and services system 19 so that any requests to those domains are handled by the WAP transport. Likewise, the Internet Browser configuration record preferably specifies an Infrastructure domain for all traffic to go through in order to ensure that the users' subscription services will function. In addition, partial domains (e.g. http://livelink, http://intranet, etc.) not explicitly listed in a browser configuration preferably default to the corporate enterprise transport, as discussed below.

The configuration settings established by the provisioning sever 20 may, nonetheless, be changed by the user (e.g. by providing a choice field in the device configuration screen to specify which transport is being changed).

In response to the user clicking the browser icon 46 (step 51), the device browser starts in single-browser mode, selects a default browser transport according to the priority scheme set forth above(step 52), and displays one of either the default home page associated with that transport or a bookmarks screen (not shown), depending on the browser setting.

Then, at step 54, in response to the user entering a URL in a "go to" dialog of the device user interface (not shown), or selecting a URL link in an email, etc., the device 12 responds in one of four ways. At step 56, if the user has explicitly set the default transport, then the device 12 uses the specified transport (step 58) for the remainder of the session for all URLs entered until the user exits the browser. At step 60, if the domain matches a specified domain associated with any of the browser configuration service books then the associated transport is used (step 62). At step 64, if the URL contains a partial domain then the corporate enterprise transport is used (step 66). Otherwise, the default transport is selected (step 58). Thereafter, the selected browser transport is used until the user enters another URL (e.g. via the "go to" dialog) or selects a bookmark from the bookmark list.

All bookmarks also preferably have a transport associated with them to allow the proper transport to be used on subsequent visits to the bookmark. Thus, when the user has visited a Web page and decides to add a bookmark for that page (step 70), the mobile communication device 12 adds the bookmark and associates it with the transport that was originally used to fetch the page (step 72). The user nonetheless has the option to change the transport (e.g. by using an "edit bookmark" dialog in the user interface). The transport associated with the bookmark is used to request the bookmark and is then used on any links followed from the original bookmark page or subsequent pages. The browser reverts back to the transport selection methodology of steps 56 - 66 if the user enters a further URL (step 54), or alternatively another associated transport is used if the user selects another bookmark from their bookmark list.

Bookmarks that are restored from a previous code version will have a transport associated with them the first time they are used. The chosen transport is based on the folder that they are in. For example, in the case of WAP bookmarks the default WAP transport is associated whereas corporate enterprise browser bookmarks use the default corporate enterprise browser transport.

While the embodiment described herein is directed to a particular implementation for associating transports with URLs and Web page bookmarks, it will be understood that the steps described hereinabove are not limited to the order in which they are described. The steps described can be performed in any suitable order as may occur to those skilled in the art.

Many other modifications and variations may occur to those skilled in the art. All such modifications and variations are believed to be within the sphere and scope of the present application.

## Claims

1. A method for providing Web access to a user on a mobile communication device, comprising:
associating a plurality of browser transports with a single browser icon for display on said mobile communication device;
associating a list of domains with each browser transport to permit URLs associated with said domains to be accessed using an associated browser transport, without any user interaction;
selecting a predetermined one of said plurality of browser transports for displaying information based on matching said URLs being requested by the user with said list of domains; and
wherein said associating a plurality of browser transports with a single browser icon is effected by downloading browser configuration service records, specifying the list of domains associated with each browser transport, to said mobile communication device.

2. The method of claim 1, wherein associating said plurality of browser transports with said single browser icon is in accordance with a predetermined priority sequence.

3. The method of claim 2, wherein said priority sequence comprises: associating a corporate enterprise browser transport, followed by associating an Internet browser transport, followed by associating a Wireless Application Protocol 'WAP' browser transport.

4. The method of claim 1, further comprising specifying a default home page for each of said browser transports.

5. The method of claim 1, wherein selecting said predetermined one of said plurality of browser transports further comprises one of selecting a browser transport specified by said user, or selecting the browser transport associated with a specified domain in said list of domains, or selecting a corporate enterprise transport if the requested information contains a partial domain.

6. The method of claim 1, further comprising associating one of said plurality of browser transports with a bookmark added by said user for a Web page displayed on said mobile communication device.

7. A system for providing Web access to a user, comprising:
a server computer for storing a plurality of configuration service records for associating a plurality of browser transports with a single browser icon for display on a mobile communication device, wherein said configuration service records permit a list of domains to be associated with each transport and further permit URLs associated with said domains to be accessed using an associated browser transport without any user interaction; and
said mobile communication device for downloading said configuration service records and for executing a browser application for selecting a predetermined one of said plurality of browser transports for displaying information based on matching said URLs being requested by the user with said list of domains.

8. The system of claim 7, wherein said plurality of browser transport protocols comprises a corporate enterprise browser transport, an Internet browser transport, and a Wireless Application Protocol 'WAP' browser transport associated by said configuration service records with said single browser icon in accordance with a predetermined priority sequence.

9. The system of claim 8, wherein said priority sequence comprises associating said corporate enterprise browser transport, followed by associating said Internet browser transport, followed by associating said WAP browser transport.

10. The system of claim 9, wherein said configuration service records further comprise a default home page for each of said browser transport.

11. The system of claim 7, wherein said browser application further comprises means for selecting one of either a browser transport specified by said user, the browser transport associated with a specified domain in said list of domains, or a corporate enterprise transport if the requested information contains a partial domain.

12. The system of claim 7, wherein said browser application further comprises means for associating one of said plurality of browser transports with a bookmark added by said user for a Web page displayed on said mobile communication device.

13. A computer readable medium storing program code executable by a processor of a computing device to cause said computing device to perform all the steps of the method of any one of claims 1 to 6.

## Patentansprüche

1. Verfahren zum Vorsehen eines Web-Zugangs für einen Benutzer auf einer mobilen Kommunikationsvorrichtung, das aufweist:
Zuordnen einer Vielzahl von Browser-Transporten zu einem einzelnen Browser-Symbol zur Anzeige auf der mobilen Kommunikationsvorrichtung;
Zuordnen einer Liste von Domains zu jedem Browser-Transport, um einen Zugriff auf URLs, die zu den Domains gehören, unter Verwendung eines zugehörigen Browser-Transports ohne eine Benutzerinteraktion zu ermöglichen;
Auswählen eines vorgegebenen der Vielzahl von Browser-Transporten zur Anzeige von Information basierend auf einer Übereinstimmung der URLs,
die von dem Benutzer angefordert werden, mit der Liste von Domains; und
wobei die Zuordnung einer Vielzahl von Browser-Transporten zu einem einzelnen Browser-Symbol bewirkt wird durch Herunterladen von Browser-Konfigurations-Dienst-Datensätzen, die die Liste von Domains spezifizieren,
die zu jedem Browser-Transport gehören, auf die mobile Kommunikationsvorrichtung.

2. Verfahren gemäß Anspruch 1, wobei die Zuordnung der Vielzahl von Browser-Transporten zu dem einzelnen Browser-Symbol in Übereinstimmung mit einer vorgegebenen Prioritätssequenz geschieht.

3. Verfahren gemäß Anspruch 2, wobei die Prioritätssequenz aufweist: Zuordnen eines Firmen-Browser-Transports, gefolgt von einem Zuordnen eines Internet-Browser-Transports, gefolgt von einem Zuordnen eines WAP(Wireless Application Protocol)-Browser-Transports.

4. Verfahren gemäß Anspruch 1, das weiter aufweist ein Spezifizieren einer Standard-Homepage für jeden der Browser-Transporte.

5. Verfahren gemäß Anspruch 1, wobei das Auswählen des vorgegebenen der Vielzahl von Browser-Transporten weiter aufweist eines aus Auswählen eines Browser-Transports, der durch den Benutzer spezifiziert wird, oder Auswählen des Browser-Transports, der zu einer spezifizierten Domain in der Liste von Domains gehört, oder Auswählen eines Firmen-Transports, wenn die angeforderte Information eine Teil-Domain aufweist.

6. Verfahren gemäß Anspruch 1, das weiter aufweist Zuordnen eines der Vielzahl von Browser-Transporten zu einem Bookmark, das durch den Benutzer für eine Webseite hinzugefügt wird, die auf der mobilen Kommunikationsvorrichtung angezeigt wird.

7. System zum Vorsehen eines Web-Zugangs für einen Benutzer, das aufweist:
einen Servercomputer zum Speichern einer Vielzahl von Konfigurations-Dienst-Datensätzen zum Zuordnen einer Vielzahl von Browser-Transporten zu einem einzelnen Browser-Symbol zur Anzeige auf einer mobilen Kommunikationsvorrichtung, wobei die Konfigurations-Dienst-Datensätze ermöglichen, dass eine Liste von Domains zu jedem Transport zugeordnet wird, und weiter ermöglichen, dass auf URLs, die zu den Domains gehören, zugegriffen wird unter Verwendung eines zugehörigen Browser-Transports ohne eine Benutzerinteraktion; und
wobei die mobile Kommunikationsvorrichtung vorgesehen ist zum Herunterladen der Konfigurations-Dienst-Datensätze und zum Ausführen einer Browser-Anwendung zum Auswählen eines vorgegebenen der Vielzahl von Browser-Transporten zur Anzeige von Information basierend auf einer Übereinstimmung der URLs, die von dem Benutzer angefordert werden, mit der Liste von Domains.

8. System gemäß Anspruch 7, wobei die Vielzahl von Browser-Transportprotokollen aufweist einen Firmen-Browser-Transport, einen Internet-Browser-Transport und einen WAP(Wireless Application Protocol)-Browser-Transport, zugeordnet durch die Konfigurations-Dienst-Datensätze zu dem einzelnen Browser-Symbol in Übereinstimmung mit einer vorgegebenen Prioritätssequenz.

9. System gemäß Anspruch 8, wobei die Prioritätssequenz aufweist ein Zuordnen des Firmen-Browser-Transports, gefolgt von einem Zuordnen des Internet-Browser-Transports, gefolgt von einem Zuordnen des WAP(Wireless Application Protocol)-Browser-Transports.

10. System gemäß Anspruch 9, wobei die Konfigurations-Dienst-Datensätze weiter eine Standard-Homepage für jeden der Browser-Transporte aufweisen.

11. System gemäß Anspruch 7, wobei die Browser-Anwendung weiter Mittel aufweist zum Auswählen eines aus einem Browser-Transport, der durch den Benutzer spezifiziert wird, des Browser-Transports, der zu einer spezifizierten Domain in der Liste von Domains gehört, oder eines Firmen-Transports, wenn die angeforderte Information eine Teil-Domain aufweist.

12. System gemäß Anspruch 7, wobei die Browser-Anwendung weiter Mittel aufweist zum Zuordnen eines der Vielzahl von Browser-Transporten zu einem Bookmark, das durch den Benutzer für eine Webseite hinzugefügt wird, die auf der mobilen Kommunikationsvorrichtung angezeigt wird.

13. Computerlesbares Medium, das Programmcode speichert, der durch einen Prozessor einer Computervorrichtung ausführbar ist, um die Computervorrichtung zu veranlassen, alle Schritte des Verfahrens gemäß einem der Ansprüche 1 bis 6 durchzuführen.

## Revendications

1. Procédé pour fournir un accès Web à un utilisateur sur un dispositif de communication mobile, consistant à :
associer une pluralité de protocoles de transport de navigateur à une icône de navigateur unique pour son affichage sur ledit dispositif de communication mobile ;
associer une liste de domaines à chaque protocole de transport de navigateur pour permettre un accès à des adresses URL associées auxdits domaines en utilisant un protocole de transport de navigateur associé sans aucune interaction de l'utilisateur ;
sélectionner l'un, prédéterminé, de ladite pluralité de protocoles de transport de navigateur pour afficher des informations basées sur une correspondance entre lesdites adresses URL demandées par l'utilisateur et ladite liste de domaines ; et
dans lequel ladite association d'une pluralité de protocoles de transport de navigateur à une icône de navigateur unique est effectuée en téléchargeant des enregistrements de services de configuration de navigateur, par spécification de la liste de domaines associés à chaque protocole de transport de navigateur, vers ledit dispositif de communication mobile.

2. Procédé selon la revendication 1, dans lequel l'association de ladite pluralité de protocoles de transport de navigateur à ladite icône de navigateur unique s'effectue conformément à une séquence de priorités prédéterminées.

3. Procédé selon la revendication 2, dans lequel ladite séquence de priorités comprend : l'association d'un protocole de transport de navigateur d'entreprise, suivie de l'association d'un protocole de transport de navigateur Internet, suivie de l'association d'un protocole de transport de navigateur du type Protocole d'Application Sans Fil "WAP".

4. Procédé selon la revendication 1, consistant en outre à spécifier une page d'accueil par défaut pour chacun desdits protocoles de transport de navigateur.

5. Procédé selon la revendication 1, dans lequel la sélection dudit protocole de transport prédéterminé parmi ladite pluralité de protocoles de transport de navigateur comprend en outre l'une de la sélection d'un protocole de transport de navigateur spécifié par ledit utilisateur ou de la sélection du protocole de transport de navigateur associé à un domaine spécifié dans ladite liste de domaines, ou de la sélection d'un protocole de transport d'entreprise si les informations demandées contiennent un domaine partiel.

6. Procédé selon la revendication 1, comprenant en outre l'association de l'un de ladite pluralité de protocoles de transport de navigateur à un signet ajouté par ledit utilisateur pour une page Web affichée sur ledit dispositif de communication mobile.

7. Système destiné à fournir un accès Web à un utilisateur, comprenant :
un ordinateur serveur destiné à stoker une pluralité d'enregistrements de services de configuration pour associer une pluralité de protocoles de transport de navigateur à une icône de navigateur unique pour l'affichage sur un dispositif de communication mobile, dans lequel lesdits enregistrements de services de configuration permettent d'associer une liste de domaines à chaque protocole de transport et permettent en outre d'accéder à des adresses URL associées auxdits domaines en utilisant un protocole de transport de navigateur associé sans aucune interaction de l'utilisateur ; et
ledit dispositif de communication mobile pour télécharger lesdits enregistrements de services de configuration et pour exécuter une application de navigateur afin de sélectionner l'un, prédéterminé, de ladite pluralité de protocoles de transport de navigateur et d'afficher des informations basées sur une correspondance entre lesdites adresses URL demandées par l'utilisateur et ladite liste de domaines.

8. Système selon la revendication 7, dans lequel ladite pluralité de protocoles de transport de navigateur comprend un protocole de transport de navigateur d'entreprise, un protocole de transport de navigateur Internet et un protocole de transport de navigateur du type protocole d'application sans fil "WAP" associé par lesdits enregistrements de services de configuration à ladite icône de navigateur unique conformément à une séquence de priorités prédéterminées.

9. Système selon la revendication 8, dans lequel ladite séquence de priorités comprend l'association dudit protocole de transport de navigateur d'entreprise, suivie de l'association dudit protocole de transport de navigateur Internet, suivie de l'association dudit protocole de transport de navigateur WAP.

10. Système selon la revendication 9, dans lequel lesdits enregistrements de services de configuration comprennent en outre une page d'accueil par défaut pour chacun desdits protocoles de transport de navigateur.

11. Système selon la revendication 7, dans lequel ladite application de navigation comprend en outre un moyen permettant de sélectionner l'un d'un protocole de transport de navigateur spécifié par ledit utilisateur, du protocole de transport de navigateur associé à un domaine spécifié dans ladite liste de domaines, ou d'un protocole de transport d'entreprise si les informations demandées contiennent un domaine partiel.

12. Système selon la revendication 7, dans lequel ladite application de navigation comprend en outre un moyen destiné à associer l'un de ladite pluralité de protocoles de transport de navigateur à un signet ajouté par ledit utilisateur pour une page Web affichée sur ledit dispositif de communication mobile.

13. Support lisible par ordinateur stockant un code de programme exécutable par un processeur d'un dispositif informatique pour faire en sorte que ledit dispositif informatique exécute toutes les étapes du procédé de l'une quelconque des revendications 1 à 6.
